# EUROPEAN PATENT SPECIFICATION

(11) **EP 1 524 918 B1**
(45) Date of publication and mention of the grant of the patent: **07.03.2007**
(21) Application number: 03766783.9
(22) Date of filing: 01.08.2003
(51) Int. Cl.: A23P 1/04, A23L 1/22, A23B 4/12, A21D 2/14, A23G 3/00

(54) **ENCAPSULATED CRYSTALLINE LACTIC ACID**
EINGEKAPSELTE KRISTALLINE MILCHSÄURE
ACIDE LACTIQUE CRISTALLIN ENCAPSULE

(30) Priority: 02.08.2002 EP 02078194; 02.08.2002 US 400045 P
(43) Date of publication of application: 27.04.2005
(73) Proprietor: Purac Biochem B.V., 4200 AA Gorinchem (NL)
(72) Inventor: CAMELOT, Damien, Michel, André, NL-5301 EG Zaltbommel (NL); BONTENBAL, Elize, Willem, NL-6701 CE Wageningen (NL)
(74) Representative: van Westenbrugge, Andries
(86) International application number: PCT/NL2003/000556
(87) International publication number: WO 2004/012534

(56) References cited:
- EP-A- 0 699 392
- US-A- 3 359 120
- US-A- 4 537 784
- US-A- 4 576 825
- US-A- 4 713 251
- NEUMÜLLER, OTTO-ALBRECHT: "Römpps Chemie-Lexikon" 1985 , FRANCKH'SCHE VERLAGSBUCHHANDLUNG, W.KELLER & CO. , STUTTGART XP002220562 page 2616

## Description

### Field of the invention

This invention is in the field of encapsulated food products, in particular encapsulated food-grade acids and more in particular encapsulated of food-grade crystalline lactic acid, its preparation and foodstuff containing said encapsulated crystalline lactic acid.

### Background of the invention

The use of acids in the food industry is well known. For example in the making of dry or semi dry sausages, lactic acid producing bacteria has long been used in order improve flavour and conservation of the product. Most often encapsulated acids are used for controlled release of acid in a food composition. The control release mechanisms vary with the application. Some applications require a temperature release (when the product is submitted to a given temperature the acid is released; fat/oil coatings), a water release (when the product is submitted to water release takes place; water soluble coatings), a pH release... etc. The aim is to protect the encapsulated core from the environment up to the time when it is needed. Different applications require a different level of encapsulation. Typically, for an application where temperature release is required, the quality of the encapsulation is judged by the percentage of release of the product dispersed in water at room temperature. A 90% encapsulation refers to a product releasing 10% of core ingredient in the water at room temperature after a given time. Similarly, the release of the food ingredient can be directly measured in the application itself through different analytical methods. In the beginning of the 60's the use of encapsulated food acids in meat was first reported. At first the use of glucono delta lactone (GDL) for curing purposes was described in US 2 992 116. Shortly after in US 3 359 120 and US 3 560 222 encapsulated food acid was reported to have similar effects. In the same period, patent applications were filed on the production of said encapsulated food acids. The processes used were very diverse: from top spray fluid bed coating to coacervation or from co-axial extrusion to spray drying techniques.

Lactic acid being widely used in the food industry such as in the dairy industry, the meat industry, the bakery industry and the confectionery industry, is also often reported as being used in a coated form in a food composition. See for instance EP 527 570, US 4 262 027, and US 4 576 825. However, as lactic acid is normally in the liquid from, it is necessary to combine it with a solid substrate in order to obtain a solid composition. In EP 527 570 it is combined with glucose, in US 4 497 845 with a solid carrier, in US 4 511 584 with micro-cellulose or calcium lactate, and in US 4 511 592, US 4 772 477, and US 6153236 the lactic acid is platted on calcium lactate. In US 4 576 825, liquid lactic acid is encapsulated using a co-axial-extrusion method. US 4 713 251 discloses the encapsulation of liquid acids. In all patents where the use of coated lactic acid is reported and where the lactic acid is mixed to another component in order to be solid, the other component does not bring any specific advantages. Its effect is limited to the solidification of lactic acid either by absorption (glucose, starches, micro-cellulose) or by reaction (calcium lactate). The content of lactic acid in these products does not exceed 60% usually. Thus, the content of lactic acid of the final products presented in these patents does not exceed 50% and more commonly not more than 30%. Moreover, the products combined with lactic acid to render it solid can have adverse effects on the application. For example the calcium lactate combined with the lactic acid has a buffering on the lactic acid. Encapsulation of liquid lactic acid requires expensive equipment and the resulting encapsulated liquid lactic acid is expensive and difficult to handle.

### Detailed description of the invention

The present invention provides encapsulated solid lactic acid particles. As no substrate is needed for said coated solid lactic acid particles, the lactic acid content of said particles may be very high and the activity of the lactic acid is not impaired by the substrate. Furthermore, the encapsulated solid lactic acid particles according to the invention are easy to handle and are less expensive than encapsulated liquid lactic acid.

The invention relates to an encapsulated crystalline lactic acid. Crystalline Lactic acid is described in *Low temperature crystal structure and molecular conformation of (L (*+*) lactic acid, J. of Molecular structure 323 (1994), p. 165-168 by A. Schouten et al.* Even though crystalline lactic acid had been known, it is difficult to crystallise lactic acid owing to the instability of the crystals, which have a very hygroscopicity. Encapsulated crystalline lactic acid is novel and its use in foodstuff has not been described before. The crystalline lactic acid for encapsulation can be obtained cooling an aqueous solution of (L+) lactic acid. Thus, after encapsulation an encapsulated (L+) crystalline lactic acid particle is obtained. It is desirable to have (L+) lactic acid as it is the type of lactic acid which can be taken up by the human body and naturally occurs in the human body.

For encapsulation any conventionally used coating material in foodstuff may be used, however when using meltable coating material, the melting point of lactic acid crystals (56°C) puts some restrictions on the choice of material: meltable coating material with melting points up to 66°C may be used provided that the proper coating conditions are used. Examples of suitable coating material comprise oils and fats, wax (bees wax, paraffin), carbohydrates (sugars, e.g. poysaccharides, glucose syrups, maltodextrins, starch, gums), proteins (both animals and vegetables), polymers (polylactic acid) or mixtures thereof. Generally coating material for foodstuff is divided into three types: the ones that melt upon application of heat, the ones that solve in the moist present in the foodstuff, and the ones of which release is induced by pH change. Of course also coating material exists of which the function is based on combinations of these. According to the invention the crystalline lactic acid may be encapsulated both by water-soluble coating material, on meltable coating material and on pH induced release coating material. The crystalline lactic acid particles may also be combined with other active ingredients to prepare so-called multiple-core or onion skin encapsulated particles. The various active ingredients may be divided by layers of coating materials, which may be the same or different. Examples of other active ingredients are vitamins, flavours, spices, carotenoids etcetera.

For encapsulation the crystalline lactic acid according to the invention (partly) meltable coating material is especially suitable. Preferably, the food-grade coating material has a melting point between 35 and 90°C, as this is the temperature at which most foodstuff such as sausages and other meat containing foodstuffs are prepared. Examples of foodstuff that is prepared in this temperature range are comminuted meat such as cooked sausages (Frankfurters, Bologni, Mortadella), paté, lever sausages.

As mentioned above, also coating material is suitable which (partly) solves in the moist present in the foodstuff. This type of coating material can be used in foodstuff which is prepared at relatively low temperatures such as summer sausage, pepperoni, pork roll, and salami-type products such as cervelats. Examples of suitable water-soluble coating material are glycerides such as acetylated monoglyceride and diglycerides and mixtures of glycerides and hydrogenated vegetable oils. Suitable hydrogenated vegetable oils are triglycerides such as hydrogenated cotton seed, corn, preanot, soybean, palm, kernel, babassu, sunflower and safflower oils.

As mentioned-above crystalline lactic acid particles are very hygroscopic. Due to the lactic acid crystals hygroscopicity, and to the separation method used in a classical crystallisation process, there is, at the surface of the crystals a liquid phase. Owing to said liquid phase at the crystal's surface, encapsulation may be hampered because the lactic acid is not properly wetted by the coating material. Further, the handling of the crystal for coating purposes is difficult because if the crystals is contacted with air, it will absorb its water, increasing the amount of liquid phase present at the crystal surface.
It was found that proper wetting can be ensured by adding a wetting agent to the lactic acid crystals. Suitable wetting agents are silica, potato starch, calcium lactate, methyl cellulose and other types of porous food-grade materials with proper particle sizes. Normally between 0,5 and 5-w/w% wetting agent based on the total weight of the crystals is used. Another advantage of using a wetting agent is that the handling of the lactic acid crystals has been improved. It is also possible to add surfactants to the coating material, or vacuum drying the lactic acid crystals to improve the wetting of the coating material.

A particularly preferred encapsulated crystalline lactic acid particle comprises silica powder and a partially hydrogenated fraction of a palm oil melting at 61°C.

The particle size of the lactic acid crystals is generally between 200 and 800 micrometers. Said particle size distribution can readily be set by controlling the crystallisation conditions.

With the encapsulated crystalline lactic acid particles according to the invention high lactic acid content in the particle may be obtained. Particles may be obtained containing up to 95 w/w% lactic acid. Generally the coating material represents 5 to 70 -w/w% of the particle, preferably 10-70 w/w%, more preferably 30-60 w/w%, and most preferably 40-30 w/w% based on the total weight of the particle. This means that particles have been obtained with a relatively high activity, so that lower amounts of encapsulated particles have to be added to the foodstuff to obtain the same effect. In a preferred embodiment of this invention, hydrogenated palm oil combined with a small fraction of silica is used as a the coating material and the amount of solid crystalline lactic acid in the product is equal or higher to 50-w/w%.

As mentioned before the encapsulated food acids are used in many industries (Bakery, Meat, Confectionery, Cosmetic, Dairy...). The preferred embodiment of this invention is directed toward the meat industry, more specifically, the use of food acid in comminuted meat such as sausages as conservation and flavouring additive. In this application, it is of great importance that the encapsulated lactic acid is not released in the meat matrix before the cooking takes place. The early release of the lactic acid in the meat matrix would result in the denaturation of the proteins and a bad texture of the end product. The specification for these products is to have less than 10-w/w% release of acid in a water dispersion after 1 hour at room temperature.

With the present invention encapsulated particles are provided having less than 10-w/w% release of lactic acid in the water after 60 minutes, upon dispersion in water at room temperature.

The encapsulated crystalline lactic acid particle according to the invention may be prepared by any conventional coating method used in the food industry such as spraying the coating material on the crystal lactic acid particles, which are fluidised, suspending the crystalline lactic acid particle in liquid coating material and spraying the suspension into a freezing chamber etcetera. Suitable encapsulation methods are described in US 4 511 584, US 4 511 592, US 4 537 784, US 3 819 838, US 3 341 466, US 3 279 994, US 3 159 874, US 3 110 626, US 3 015 128, US 2 799 241 and US 2 648 609 which are incorporated herein by reference. Preferably, the encapsulated crystalline lactic acid particles are produced in a top spray fluid bed coater. The method used for this production follows the guidelines for these processes given in the chapter 6 of Multiparticle Oral Drug delivery, Marcel Dekker Inc, (1994): *Coating of Multiparticulates Using Molten materials Formulation and process Consideration* (D. Jones & P. Percel). That is, the inlet air temperature is approximately 10 to 15°C below the melting point of the coating and atomising air and spray liquid temperatures between 40 and 60°C above the melting point of the coating. Specifically to the use of solid crystalline lactic acid, the inlet air has to be dried to ensure a low water content of the air. Alternatively, nitrogen can be used.

The present invention is further directed to a process for the preparation of comminuted meats wherein the encapsulated crystalline lactic acid particles according to the invention are added. Generally between 0.01 and 2 wt%, preferably 0.3-0.6 wt% of lactic acid is used in comminuted meats depending on the pH desired. The encapsulated crystalline lactic acid particles may be used for colour and/or for conservation and/or flavour. The invention is also directed to comminuted meat containing the encapsulated crystalline lactic acid particles according to the invention.

As the particles are easier to handle than encapsulated liquid lactic acid, and have higher lactic acid amounts than encapsulated lactic acid based on substrates, candies can be readily acid sanded with the encapsulated crystalline lactic acid particles according to the invention.
For the same reason the encapsulated crystalline lactic acid particles are very suitable for flavour and conservation in bakery products. The invention is also directed to bakery products comprising the encapsulated crystalline lactic acid particles.

The invention is further elucidated by means of examples which are to be construed as illustrative only and not as limitative.

### EXAMPLES

### Example 1

Of different products the release of acid in a water dispersion after 1 hour at room temperature was analysed. Results can be seen in table 1.

**Table 1: release test encapsulated lactic acid.**

| | Product 1 | Product 2 |
|---|---|---|
| Lactic acid w/w% | 50% | 70% |
| Silica w/w% | 1% | 1% |
| Palm oil w/w% | 49% | 29% |
| Release of acid in w/w% | | |
| 10 minutes | 0.9% | 8.3% |
| 20 minutes | 1.3% | 13.1% |
| 30 minutes | 3.3% | 23.8% |
| 60 minutes | 6.1% | -* |

| | | |
|---|---|---|
| *: not measured | | |

### Example 2

The encapsulated lactic acid was also tested in sausage application. The test was as follows: a meat emulsion with additives was made in a cutter. The encapsulated lactic acid was added to the meat emulsion and dispersed in the meat emulsion in an amount of 0.8 wt%. A cooked sausage was prepared containing the encapsulated crystalline lactic acid and a control sausage where no acid was added. After cooking the pH was measured. The initial pH of both sausages was about 5.6. After 2.5 hours, the pH in the cooked sausage containing the encapsulated lactic acid had decreased to a pH of about 5.2, whereas the pH the cooked sausage containing no lactic acid had increased to a pH of about 6.0.

### Example 3

The effect of encapsulated crystalline lactic acid on Listeria monocytogenes bacteria inoculated in cooked sausages was studied. The cooked sausage contained 0.6 wt% encapsulated crystalline lactic acid, the control sausage contained no lactic acid. It was shown that after 25 days at 7°C virtually no growth of the Listeria monocytogenes bacteria was determined in the lactic acid-containing sausage, while in the control sausage a significant growth if the Listeria monocytogenes bacteria was determined.

## Claims

1. An encapsulated crystalline lactic acid particle.

2. An encapsulated (L+) crystalline lactic acid particle.

3. The encapsulated crystalline lactic acid particle according to claim 1 or 2, which is encapsulated with a food grade coating material comprising oil or fat, wax, carbohydrates, proteins, polymers or a mixture thereof.

4. The encapsulated crystalline lactic acid particle according to claim 1, 2 or 3, wherein the food-grade coating material has a melting point between 35 and 90°C.

5. The encapsulated crystalline lactic acid particle according to any one of claims 1 - 4, wherein the food grade coating is a non-GMO vegetable oil.

6. The encapsulated crystalline lactic acid particle according to any one of claims 1 - 5, wherein the crystalline lactic acid particle has been treated with a wetting agent prior to encapsulation.

7. The encapsulated crystalline lactic acid particle according to claim 6, wherein the wetting agent is silica or starch.

8. The encapsulated crystalline lactic acid particle according to claim 7, comprising silica powder and a partially hydrogenated fraction of a palm oil melting at 61°C.

9. The encapsulated crystalline lactic acid particle according to any of claims 1 - 7, wherein the particle comprises up to 95 wt% lactic acid based on the total weight of the particle.

10. The encapsulated crystalline lactic acid particle according to claim 8, wherein the coating material represents 10 to 70-w/w% of the particle.

11. The encapsulated crystalline lactic acid particle according to claim 8, wherein the coating material represents 30 to 60-w/w% of the particle.

12. Process for the preparation of comminuted meat wherein the encapsulated crystalline lactic acid particle according to any one of claims 1 - 11 is added.

13. Process according to claim 12 wherein the encapsulated crystalline lactic acid particle is added for colour or conservation and/or flavour.

14. Comminuted meat comprising encapsulated crystalline lactic acid particles.

15. Process for acid sanding of candies wherein the encapsulated crystalline lactic acid particle according to any one of claims 1 - 11 is used.

16. Acid sanded candies comprising encapsulated crystalline lactic acid particles.

17. Use of encapsulated crystalline lactic acid particles for flavour and conservation in bakery products.

18. Bakery product comprising encapsulated crystalline lactic acid particles.

## Patentansprüche

1. Eingekapseltes kristallines Milchsäure-Teilchen.

2. Eingekapseltes kristallines (L+) Milchsäure-Teilchen.

3. Eingekapseltes kristallines Mitchsäure-Teitchen gemäß Anspruch 1 oder 2, welches mit einem Lebensmittelgrad-Beschichtungsmaterial, umfassend Öl oder Fett, Wachs, Kohlenhydrate, Proteine, Polymere oder ein Gemisch davon, eingekapselt ist.

4. Eingekapseltes kristallines Mitchsäure-Teitchen gemäß Anspruch 1, 2 oder 3, wobei das Lebensmittelgrad-Beschichtungsmaterial einen Schmelzpunkt von zwischen 35 und 90°C aufweist.

5. Eingekapseltes kristallines Milchsäure-Teilchen gemäß einem der Ansprüche 1 bis 4, wobei die Lebensmitelgrad-Beschichtung ein Nicht-GMO-Pflanzenöl ist.

6. Eingekapseltes kristallines Milchsäure-Teilchen nach einem der Anspruche 1 bis 5, wobei das kristalline Milchsäure-Teilchen mit einem Benetzungsmittel vor der Einkapselung behandelt worden ist.

7. Eingekapseltes kristallines Milchsäure-Teilchen nach Anspruch 6, wobei das Benetzungsmittel Silica oder Stärke ist.

8. Eingekapseltes kristallines Milchsäure-Teilchen nach Anspruch 7, umfassend Silicapulver und eine teilweise hydrierte Fraktion eines Palmöls, schmelzend bei 61°C.

9. Eingekapseltes kristallines Milchsäure-Teilchen gemäß einem der Ansprüche 1 bis 7, wobei das Teilchen bis zu 95 Gew.-% Milchsäure, bezogen auf das Gesamtgewicht des Teilchens, umfaßt.

10. Eingekapseltes kristallines Milchsäure-Teilchen gemäß Anspruch 8, wobei das Beschichtungsmaterial 10-70 Gew./Gew.-% des Teilchens darstellt.

11. Eingekapseltes kristallines Milchsäure-Teilchen gemäß Anspruch 8, wobei das Beschichtungsmaterial 30-60 Gew./Gew.-% des Teilchens darstellt.

12. Verfahren zur Herstellung von zerkleinertem Fleisch, wobei das einkapselte kristalline Milchsäure-Teilchen gemäß einem der Ansprüche 1 bis 11 zugegeben wird.

13. Verfahren gemäß Anspruch 12, wobei das eingekapselte kristalline Milchsäure-Teilchen zur Färbung oder Konservierung und/oder Geschmack zugegeben wird.

14. Zerkleinertes Fleisch, umfassend eingekapselte kristalline Milchsäure-Teilchen.

15. Verfahren zum saueren Bestreuen von Süßigkeiten, wobei das eingekapselte kristalline Milchsäure-Teilchen gemäß einem der Ansprüche 1 bis 11 verwendet wird.

16. Sauer bestreute bzw. säurebedeckte Süßigkeit, umfassend eingekapselte kristalline Milchsäureteilchen.

17. Verwendung von eingekapselten kristallinen Milchsäure-Teilchen zum Geschmack und Konservierung in Backwaren.

18. Backware, umfassend eingekapselte kristalline Milchsäure-Teilchen.

## Revendications

1. Particule d'acide lactique cristallin encapsulée.

2. Particule d'acide lactique cristallin (L+) encapsulée.

3. Particule d'acide lactique cristallin encapsulée selon la revendication 1 ou 2,
encapsulée d'une substance d'enrobage alimentaire comprenant de l'huile ou des matières grasses, de la cire, des glucides, des protéines, des polymères ou un mélange de ceux-ci.

4. Particule d'acide lactique cristallin encapsulée selon la revendication 1, 2 ou 3,
dans laquelle la substance d'enrobage alimentaire a un point de fusion situé entre 35 et 90°.

5. Particule d'acide lactique cristallin encapsulée selon l'une quelconque des revendications 1 à 4,
dans laquelle l'enrobage alimentaire est une huile végétale qui ne contient pas d'organismes génétiquement modifiés.

6. Particule d'acide lactique cristallin encapsulée selon l'une quelconque des revendications 1 à 5,
dans laquelle la particule d'acide lactique cristallin a été traitée avec un agent mouillant avant d'être encapsulée.

7. Particule d'acide lactique cristallin encapsulée selon la revendication 6,
dans laquelle l'agent mouillant est de la silice ou de l'amidon.

8. Particule d'acide lactique cristallin encapsulée selon la revendication 7, comprenant de la poudre de silice et une fraction partiellement hydrogénée d'une huile de palme fondant à 61°C.

9. Particule d'acide lactique cristallin encapsulée selon l'une quelconque des revendications 1 à 7,
dans laquelle la particule comprend jusqu'à 95 % en poids d'acide lactique sur la base du poids total de la particule.

10. Particule d'acide lactique cristallin encapsulée selon la revendication 8,
dans laquelle la substance d'enrobage représente 10 à 70 % en poids de la particule.

11. Particule d'acide lactique cristallin encapsulée selon la revendication 8,
dans laquelle la substance d'enrobage représente 30 à 60 % en poids de la particule.

12. Procédé pour la préparation de viande hachée
selon lequel on ajoute la particule d'acide lactique cristallin encapsulée selon l'une quelconque des revendications 1 à 11.

13. Procédé selon la revendication 12,
selon lequel on ajoute la particule d'acide lactique cristallin encapsulée pour la couleur ou la conservation et/ou le goût.

14. Viande hachée comprenant des particules d'acide lactique cristallin encapsulées.

15. Procédé pour aciduler des bonbons,
selon lequel on utilise la particule d'acide lactique cristallin encapsulée selon l'une quelconque des revendications 1 à 11 est utilisée.

16. Bonbons acidulés comprenant des particules d'acide lactique cristallin encapsulées.

17. Utilisation de particules d'acide lactique cristallin encapsulées pour le goût et la conservation dans les produits de boulangerie.

18. Produit de boulangerie comprenant des particules d'acide lactique cristallin encapsulées.
